# EUROPÄISCHE PATENTSCHRIFT

(11) **EP 1 650 368 B1**
(45) Veröffentlichungstag und Bekanntmachung des Hinweises auf die Patenterteilung: **01.04.2009**
(21) Anmeldenummer: 05108957.1
(22) Anmeldetag: 28.09.2005
(51) Int. Cl.: E04B 1/76

(54) **Verschlussdeckel für eine Befestigungsanordnung**
Closing cover for a connection device
Bouchon obturateur pour dispositif de liaison

(30) Priorität: 23.10.2004 DE 102004051739
(43) Veröffentlichungstag der Anmeldung: 26.04.2006
(73) Patentinhaber: HILTI Aktiengesellschaft, 9494 Schaan (LI)
(72) Erfinder: Schlömer, Horst, 86919 Utting (DE); Trautwein, Bernd, Broken Arrow OK 74012 (US)
(74) Vertreter: Wildi, Roland

(56) Entgegenhaltungen:
- DE-A1- 10 361 751
- DE-U1- 20 317 103
- DE-U1- 29 509 418

## Beschreibung

### Technisches Gebiet

Die Erfindung betrifft eine Befestigungsanordnung zur beabstandeten Befestigung eines Gegenstandes an einem Untergrund, der im Oberbegriff des Patentanspruchs 1 genannten Art.

### Stand der Technik

Bauteile wie beispielsweise tragende Aussenwände von Gebäuden werden beispielsweise für eine ausreichende Wärmedämmung vielfach mit einer nichttragenden Schicht einer wärmedämmenden Verkleidung z. B. aus Styropor versehen, wobei die Aussenseite der Verkleidung zum Schutz vor Witterungseinflüssen wie Feuchtigkeit und Nässe mit einer Schutzschicht, z. B. mit einem Aussenputz versehen wird. Derartige Fassaden, bei denen die wärmedämmende Verkleidung an dem Bauteil festgeklebt wird, werden auch als Wärmedämmverbundsystem-Fassaden bezeichnet. Daneben gibt es auch vorgehängte Fassadensysteme, bei denen die Verkleidung mittels einer Tragkonstruktion beabstandet zu dem Untergrund befestigt ist, so dass Luft zwischen der Verkleidung und dem Untergrund zum Abführen von eingedrungener Feuchtigkeit zirkulieren kann. Weitere, mit einer nichttragenden Schicht versehene Fassadensysteme sind beispielsweise Wärmedämmputzsysteme, transparente Wärmedämmsysteme oder zweischalige Mauerwerke. An Bauteilen, wie z. B. Gebäudedecken, können ebenfalls Verkleidungen, z. B. in Form einer abgehängten Decke, angebracht sein.

Die Verkleidungen selbst sind häufig für eine Befestigung von schweren Gegenständen und der Übernahme der auftretenden Befestigungskräfte ungeeignet. Um schwere Gegenstände beabstandet zum Untergrund zu befestigen, sind Verankerungselemente, wie z. B. mittels Spreiz- oder Klebedübel im Bauteil verankerten Gewindestangen, bekannt, welche die nichttragende Verkleidung durchsetzen. Um beispielsweise das Eindringen von Feuchtigkeit oder Nässe entlang des Verankerungselements in die Wärmedämmung einer Aussenwand zu verhindern, wird der vorhandene Spalt beispielsweise mit einer Silikondichtung abgedichtet. An dem vorstehenden Abschnitt des Verankerungselements sind die zu befestigenden Gegenstände festlegbar.

Auf die festgelegten Gegenstände, wie beispielsweise Markisen oder dergleichen, wirken wind- und wetterbedingte veränderliche, parallel zum Untergrund verlaufende Kräfte, so dass infolge der beabstandeten Befestigung beachtliche Momentenkräfte auf die Befestigungsanordnung beziehungsweise auf das Verankerungselement und dessen Verankerung im Untergrund wirken. Diese Kräfte führen zu einem Hin- und Herwackeln des Verankerungselements, wodurch die äussere Schutzschicht der Verkleidung beschädigt oder zumindest die gegen einen Feuchtigkeitseintritt schützende Abdichtung zerstört wird.

Um bei einer zum Untergrund beabstandeten Befestigung Druck auf die nichttragende Schicht beziehungsweise auf die druckempfindliche Schutzschicht zu vermeiden, ist es bekannt, ein im Untergrund verankerbares Verankerungselement, wie beispielsweise eine Gewindestange, mit einem hülsenförmigen Abstandselement z. B. aus Metall zu ergänzen, das eine Durchführöffnung für das Verankerungselement aufweist. Das einen grösseren Aussendurchmesser als das Verankerungsmittel aufweisende Abstandselement wird entsprechend der Dicke der Verkleidung beziehungsweise des Abstandes zwischen dem zu befestigenden Gegenstandes und dem Untergrund abgelängt und in eine entsprechend dem Abstandselement bemessene Ausnehmung in der Verkleidung eingesetzt. Der zu befestigende Gegenstand wird über das Verankerungselement gegen das Abstandselement und somit gegen die Oberfläche des Untergrundes verspannt. Durch die Anlagefläche des Abstandselements an dem Untergrund können auch parallel zur Oberfläche des Untergrundes wirkende Kräfte auf den Untergrund übertragen werden.

Nachteilig an dieser Lösung ist, dass für eine einwandfreie Funktion dieser Befestigungsanordnung das Abstandselement exakt entsprechend der örtlichen Dickenabmessung der Verkleidung abgelängt und gegebenenfalls entgratet werden muss. Dies stellt einen erheblichen zeitlichen Aufwand bei der Montage jedes einzelnen Befestigungspunktes für eine zum Untergrund beabstandeten Befestigung eines Gegenstandes dar. Zudem kann bei einer gering bemessenen Anlagefläche des Abstandselements infolge der zeitlich veränderlich auftretenden Druckkräfte das Abstandselement in den Untergrund gedrückt werden, was zu einem Hin- und Herwackeln des Verankerungselements mit den zuvor dargelegten Nachteilen führt. Bei einer wärmegedämmten Fassade kann der Aussendurchmesser des Abstandselements zur Schaffung einer grösseren Anlagefläche des Abstandselements am Untergrund und damit zur Übertragung der anfallenden Druckkräfte in den Untergrund nicht beliebig vergrössert werden, da ansonsten mit dem erstellten Befestigungspunkt eine unerwünschte Wärmebrükke geschaffen.

Aus der DE 199 47 913 A1 ist eine Befestigungsanordnung bekannt, die ein hülsenförmiges Abstandselement und zumindest ein, in das Abstandselement einschraubbares Lastanbringungsmittel aufweist, wobei das Abstandselement direkt oder indirekt mittels eines Klebers im Untergrund verankert wird. Das Abstandselement weist im verspannten Zustand der Befestigungsanordnung nur eine geringe Anlagefläche zum Untergrund auf, so dass dieses unter Belastung in den Untergrund eindringen kann. Des Weiteren ist auch bei diesem Abstandselement eine exakte Ablängung und Nachbearbeitung erforderlich.

Aus der DE 295 09 418 U1 ist eine Befestigungsanordnung zur beabstandeten Befestigung eines Markisenträgers an einer mit einer Aussendämmung versehenen Aussenwand eines Gebäudes bekannt, die ein im Untergrund verankerbares Verankerungselement, ein erstes mit einem Aussengewinde versehenes Hülsenteil und ein zweites mit einem Innengewinde versehenes Hülsenteil aufweist, wobei die Hülsenteile jeweils eine Durchführöffnung für das Verankerungselement aufweisen und in eine entsprechend der Abmessungen des zweiten Hülsenteils ausgebildete Ausnehmung in der Verkleidung eingesetzt werden. Das zweite Hülsenteil weist eine Grundplatte und einen von der Grundplatte abragenden, mit dem Innengewinde versehenen umlaufenden ersten Steg auf, wobei ein Aufnahmeraum für eine zumindest bereichsweise Aufnahme des zweiten Hülsenteils ausgebildet ist. Die beiden über die Gewinde ineinander greifenden Hülsenteile sind durch relatives Verdrehen zueinander an die örtlich vorhandene Dicke der Verkleidung und der Schutzschicht anpassbar.

Nachteilig an der bekannten Lösung ist, dass die Hülsenteile und insbesondere die Gewinde zur Übertragung der auftretenden Kräfte eine entsprechend massive Ausgestaltung aufweisen müssen. Dadurch weist diese bekannte Befestigungsanordnung hohe Fertigungskosten auf, was sich insbesondere bei einer Vielzahl von zu erstellenden Befestigungspunkten nachteilig auswirkt. Zudem ist eine grosse Ausnehmung in der Verkleidung für das Einsetzen der Hülsenteile erforderlich, was beispielsweise bei einer wärmegedämmten Fassade eine unerwünschte Wärmebrücke schafft.

Aus der DE 203 17 103 U1 ist eine Befestigungsanordnung zur beabstandeten Befestigung eines Gegenstandes an einem Untergrund bekannt, insbesondere an einem mit einer Verkleidung versehenen Bauteil, die ein Verankerungselement mit einem einen Verankerungsabschnitt aufweisenden ersten Ende und einem zumindest einen Befestigungsabschnitt aufweisenden zweiten Ende sowie einen Verschlussdeckel mit einer Grundplatte aufweist. Die Grundplatte weist eine Durchführöffnung für das Verankerungselement der Befestigungsanordnung und einen von der Grundplatte abragenden, umlaufenden ersten Steg auf, wobei ein Aufnahmeraum ausgebildet ist. An der Grundplatte sind Öffnungen vorgesehen.

### Darstellung der Erfindung

Aufgabe der Erfindung ist es, eine Befestigungsanordnung zur beabstandeten Befestigung an einem Untergrund zu schaffen, die flexibel anpassbar, einfach montierbar sowie kostengünstig herstellbar ist.

Zudem sollen ausreichend grosse Kräfte übertragbar sein und die erforderlichen Abmessungen auf ein Minimum beschränkt sein.

Die Aufgabe ist durch die Merkmale der unabhängigen Ansprüche gelöst. Vorteilhafte Weiterbildungen sind in den Unteransprüchen dargelegt.

Gemäss der Erfindung weist die Befestigungsanordnung ein Abstandselement mit einer Durchführöffnung zur Durchführung des Verankerungselements auf, wobei der Aufnahmeraum des Verschlussdeckels das Abstandselement bereichsweise aufnimmt und der Aufnahmeraum mit einer Verfüllmasse verfüllbar ist.

In der Verkleidung und einer allfällig vorhandenen Schutzschicht wird eine Ausnehmung bis zur Oberfläche des Untergrundes erstellt und anschliessend die vorhandene Dicke an Ort und Stelle gemessen. Gleichzeitig oder zeitlich versetzt dazu wird die Bohrung für die Verankerung des Verankerungselements mittels Spreiz- oder Klebedübel in den Untergrund erstellt. Das Verankerungselement weist ein mit einem Verankerungsabschnitt versehenes erstes Ende und zumindest ein Befestigungsabschnitt aufweisendes Ende auf. Beispielsweise ist das Verankerungselement als Gewindestange oder Ankerstange ausgebildet. Das Verankerungselement ist vorteilhafterweise aus einem nichtrostenden Stahl gefertigt. Alternativ kann ein anderer zugfester, vorzugsweise korrosionsbeständiger und schlecht Wärme leitender Werkstoff, wie z. B. ein glasfaserverstärkter Kunststoff zur Herstellung des Verankerungselements verwendet werden.

Das Abstandselement ist vorteilhafterweise aus einem druckfesten, optional korrosionsbeständigem und vorzugsweise schlecht Wärme leitenden Material, z. B. aus Kunststoff, gefertigt. Das Abstandselement weist eine Durchführöffnung für das Verankerungselement auf und wird von einem Halbfabrikat entsprechend der gemessenen Dicke minus einer vorbestimmten Länge mit einem geeigneten Werkzeug abgelängt. Wie nachfolgend noch dargelegt wird, muss beim Ablängen des Abstandselements kein Augenmerk auf die exakte Länge des Abstandselements und die Rechtwinkligkeit des Schnitts gelegt werden. Damit ist das Ablängen schnell und einfach auf der Baustelle ohne grossen Zeitaufwand durchführbar. Des Weiteren fällt weniger Verschnitt an, da ein ungenau platzierter Schnitt nicht zwingend zu einem nicht verwendbaren Abstandselement führt. Für eine grobe Orientierung der Lage des zu erstellenden Schnitts sind vorteilhafterweise am äusseren Umfang des Halbfabrikats angeordnete, umlaufende Markierungen vorgesehen. Diese Markierungen können als Vertiefungen beispielsweise zur Führung des verwendeten Werkzeuges ausgebildet sein. Des Weiteren können die Markierungen als Sollbruchstelle ausgebildet sein, was gegebenenfalls ein Ablängen senkrecht zur Längserstreckung des Abstandselements ohne die Verwendung eines Werkzeugs ermöglicht. Die mit dem Untergrund in Anlage kommende Anlagefläche des Abstandselements wird mit einem Haftmittel, wie z. B. einen aushärtbaren Kleber, versehen und das Abstandselement in die erstellte Ausnehmung eingesetzt. Dabei wird das Haftmittel zwischen dem Abstandselement und dem Untergrund gepresst, wobei allfällig vorhandene Unebenheiten am Untergrund ausgeglichen werden. Nach dem Aushärten des Haftmittels ist eine vollflächige druckfeste Auflage des Abstandselements am Untergrund gegeben, die eine gleichmässige Übertragung von Drucklasten auf den Verankerungsgrund gewährleistet.

Der Verschlussdeckel ist vorteilhafterweise aus einem druckfesten, optional korrosionsbeständigem und vorzugsweise schlecht Wärme leitenden Material, z. B. aus Kunststoff in einem Spritzguss-Verfahren, gefertigt. Der Verschlussdeckel wird mit dem ersten Steg voran teleskopartig über das Abstandselement geschoben, bis die Grundplatte des Verschlussdekkels in der Ebene der Verkleidung beziehungsweise in der Ebene der Schutzschicht zu liegen kommt. Dabei wird das freie Ende des Abstandselements von dem freien Ende des umlaufenden Steges des Verschlussdeckels umfasst. Durch die Einfüllöffnung wird eine Verfüllmasse, vorzugsweise eine fliessfähige, aushärtbare Masse wie ein Zweikomponenten-Injektionsmörtel, in den vorhandenen Hohlraum des Aufnahmeraums des Verschlussdeckels zur Fixierung der eingestellten Gesamtdistanz der Befestigungsanordnung verfüllt. Nach dem Aushärten der Verfüllmasse bilden das Abstandselement, die ausgehärtete Verfüllmasse und der Verschlussdeckel ein druckfestes Element, an dem ein Gegenstand beabstandet zum Untergrund befestigbar ist. Zur Abdichtung eines allfällig vorhandenen Spaltes zwischen dem Verschlussdeckel und der Schutzschicht beziehungsweise der Verkleidung kann ein Dichtmittel vorzugsweise ein gegenüber Witterungseinflüssen weitgehend beständiges Silikonmaterial angeordnet werden.

Mit der erfindungsgemässen Befestigungsanordnung kann der Zeitpunkt der Verankerung des Verankerungselements im Untergrund in Abhängigkeit der örtlichen Gegebenheiten beziehungsweise dem gewünschten Montageablauf angepasst werden. Beispielsweise wird zuerst das Verankerungselement im Untergrund verankert, das Abstandselement und anschliessend der Verschlussdeckel über das verankerte Verankerungselement geschoben, wobei abschliessend der vorhandene Hohlraum im Aufnahmeraum des Verschlussdeckels mit der Verfüllmasse verfüllt wird. Alternativ wird zuerst das Abstandselement am Untergrund festgelegt und das Verankerungselement zur Verankerung im Untergrund durch das Abstandselement hindurchgeführt. Anschliessend wird der Verschlussdeckel über das verankerte Verankerungselement geschoben und der vorhandene Hohlraum im Aufnahmeraum des Verschlussdeckels mit der Verfüllmasse verfüllt. In einer weiteren, nicht abschliessenden Variante wird zuerst das Abstandselement am Untergrund festgelegt, der Verschlussdeckel über das Abstandselement geschoben und das Verankerungselement zur Verankerung im Untergrund durch das Abstandselement sowie den Verschlussdeckel hindurchgeführt. Anschliessend wird der vorhandene Hohlraum im Aufnahmeraum des Verschlussdeckels mit der Verfüllmasse verfüllt.

Bevorzugt ist zusätzlich zumindest eine Austrittsöffnung an der Grundplatte vorgesehen, so dass beim Verfüllen des Hohlraums mit der Verfüllmasse die aus dem Hohlraum verdrängte Luft aus diesem entweichen kann. Die Bildung von Lufteinschlüssen während der Verfüllung des Hohlraums wird verhindert. Durch die Einfüllöffnung an der Grundplatte wird solange Verfüllmasse eingebracht, bis diese in der Austrittsöffnung zu sehen ist oder aus dieser austritt. Die zumindest eine Austrittsöffnung dient zudem dem Anwender als Kontrolle der korrekten Verfüllung des Hohlraums.

Vorzugsweise ist zusätzlich ein von der Grundplatte abragender, umlaufender zweiter Steg im Bereich der Durchführöffnung vorgesehen, wobei der erste Steg und der zweite Steg parallel zueinander verlaufend angeordnet sind. Mit dem ersten Steg und dem zweiten Steg wird ein seitlich aussen und innen begrenzter Aufnahmeraum zur bereichsweisen Aufnahme des Abstandselementes geschaffen, wobei der zweite Steg den Aufnahmeraum beziehungsweise den zu verfüllenden Hohlraum gegenüber dem Verankerungselement beziehungsweise den Durchführöffnungen im Verschlussdeckel und dem Abstandselement abschliesst. Die Abmessungen des ersten und des zweiten Stegs sind vorteilhaft derart gewählt, dass sie den Austritt von Verfüllmasse aus dem Hohlraum zwischen dem Abstandselement und dem Verschlussdeckel wirksam verhindern, die Verschiebung des Verschlussdeckels auf dem Abstandselement jedoch zulassen. Mit dieser Ausführungsform des Verschlussdeckels ergibt sich ein weiterer möglicher Montageablauf, bei dem zuerst das Abstandselement am Untergrund festgelegt, der Verschlussdeckel über das Abstandselement geschoben und der vorhandene Hohlraum im Aufnahmeraum des Verschlussdeckels mit der Verfüllmasse verfüllt wird. Das Verankerungselement kann zur Verankerung im Untergrund durch das geschaffene druckfeste Element hindurchgeführt werden.

Bevorzugt ragen der erste Steg und/oder der zweite Steg von der Grundplatte ausgehend von dieser ab, so dass die aussen zu liegende Fläche des Verschlussdeckels flach ausgebildet ist und eine direkt an diesem anliegende Montage des zu befestigenden Gegenstandes oder das Anordnen einer Schutzschicht an dem Verschlussdeckel ermöglicht, die von der Verkleidung ausgehend zusätzlich den geschaffenen Befestigungspunkt vor dem Eindringen von Feuchtigkeit und Nässe schützt.

Vorzugsweise ist der erste Steg beabstandet zum äusseren Umfang an der Grundplatte angeordnet, womit ein umlaufender Kragen geschaffen wird, der einerseits als Anschlag für den Verschlussdeckel bei dessen Montage dient und andererseits eine Aufnahmefläche beispielsweise für ein Haftmittel, wie einen Kleber, schafft. Der mit der Schutzschicht beziehungsweise der Verkleidung in Anlage gebrachte Verschlussdeckel haftet dadurch an derselben, so dass beim Verfüllen des Hohlraumes der Verschlussdeckel sich nicht verschieben kann und ein exakter Befestigungspunkt für den zu befestigenden Gegenstand geschaffen wird. Zudem kann die Aufnahmefläche auch der Anordnung eines Dichtmittels zur Abdichtung eines allfällig vorhandenen Spaltes zwischen dem Verschlussdeckel und der Schutzschicht beziehungsweise der Verkleidung dienen. Des Weiteren kann mit einem solchen Verschlussdeckel ein allfällig vorhandener ausgefranster Rand der in der Verkleidung beziehungsweise in der Schutzschicht erstellten Ausnehmung abgedeckt und abgedichtet werden. Je nach Wahl des Materials des Dichtmittels weist dieses neben der dichtenden Funktion zusätzlich eine haftende Wirkung auf. Mittels einer wirkenden Haltekraft zwischen dem Verschlussdeckel und der Verkleidung beziehungsweise der Schutzschicht wird ein Wegdrücken nach aussen des Verschlussdeckels beim Verfüllen des Hohlraums verhindert.

Bevorzugt sind in Richtung der Erstreckung des ersten Steges verlaufende Erhebungen vorgesehen, welche beim Einsetzen des Verschlussdeckels das umgebende Material bereichsweise verdrängen, wodurch der Verschlussdeckel durch Klemmwirkung auch beim Verfüllen des Hohlraums in der ausgerichteten Position gehalten wird. Vorzugsweise sind die Erhebungen keilförmig ausgebildet, wodurch der Verschlussdeckel einfach einsetzbar ist und die grösste Klemmwirkung an der Aussenseite der Verkleidung auf den Verschlussdeckel wirkt, was insbesondere bei einer allfällig vorhandenen, aussenseitig an der Verkleidung angeordneten Schutzschicht eine verbesserte Haltekraft für den Verschlussdeckel ermöglicht. Mittels einer wirkenden Haltekraft zwischen dem Verschlussdeckel und der Verkleidung beziehungsweise der Schutzschicht wird ein Wegdrücken nach aussen des Verschlussdeckels beim Verfüllen des Hohlraums verhindert. Alternativ sind die Erhebungen beispielsweise streifenförmig ausgebildet.

Bevorzugt weist die Grundplatte zumindest bereichsweise eine raue Struktur auf. Die raue Struktur ist beispielsweise an der Seite der Grundplatte angeordnet, von welcher der erste Steg abragt, so dass eine verbesserte Haftung der Verfüllmasse an dem Verschlussdeckel gegeben ist, was eine zusätzliche Querkraftübertragung bewirkt. Zusätzlich oder alternativ kann für eine verbesserte Haftung einer Schutzschicht an dem Verschlussdeckel auch die andere, von dem Untergrund abgewandte Seite der Grundplatte eine raue Struktur aufweisen.

Vorzugsweise ist die Grundplatte kreisförmig ausgebildet sowie optional der erste Steg und der zweite Steg konzentrisch an der Grundplatte angeordnet sind, so dass ein ringförmiger Aufnahmeraum zur bereichsweisen Aufnahme des Abstandselements ausgebildet wird. Die Ausnehmung in der Verkleidung wird beispielsweise mit einem Kernbohrer erstellt und weist im Grundriss einen kreisförmigen Querschnitt auf, in den ein als Abstandselement dienender kreiszylindrischer Hohlkörper mit einer Durchführungsöffnung eingesetzt wird. Das Abstandselement wird von einem rohrförmigen Halbfabrikat abgelängt.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand eines Ausführungsbeispieles näher erläutert. Es zeigen:
- Fig. 1: Einen Verschlussdeckel im Grundriss;
- Fig. 2: den in Fig. 1 dargestellten Verschlussdeckel in einer Seitenansicht; und
- Fig. 3: eine montierte Befestigungsanordnung mit einem, in Fig. 1 und 2 gezeigten Verschlussdeckel in einer Schnittdarstellung.

Grundsätzlich sind in den Figuren gleiche Teile mit den gleichen Bezugszeichen versehen.

### Wege zur Ausführung der Erfindung

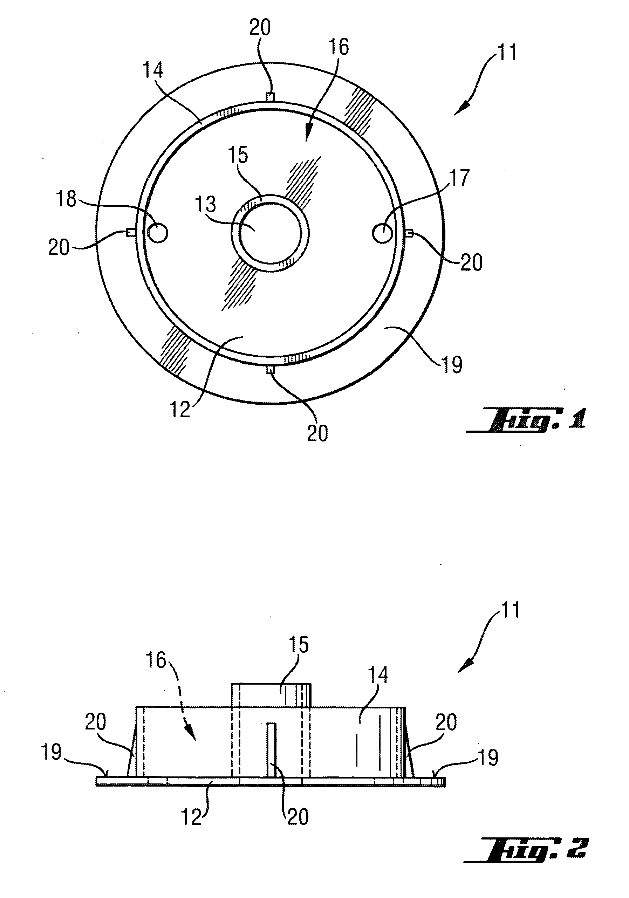

Der in den Fig. 1 und 2 dargestellte Verschlussdeckel 11 für eine Befestigungsanordnung zur beabstandeten Befestigung eines Gegenstandes an einem Untergrund weist eine kreisförmige Grundplatte 12 mit einer Durchführöffnung 13 für ein Verankerungselement der Befestigungsanordnung, einen beabstandet zum äusseren Umfang der Grundplatte 12 angeordneten, umlaufenden ersten Steg 14 und einen im Bereich der Durchführöffnung 13 vorgesehenen, umlaufenden zweiten Steg 15 auf. An der Grundplatte 12 sind des Weiteren eine Einfüllöffnung 17 und eine Austrittsöffnung 18 vorgesehen. Durch die zum äusseren Umfang der Grundplatte 12 beabstandete Anordnung des ersten Stegs 14 wird ein Kragen mit einer Anlagefläche 19 geschaffen.

Der erste Steg 14 und der zweite Steg 15 sind parallel zueinander verlaufend sowie konzentrisch an der kreisförmigen Grundplatte 12 angeordnet und schliessen mit der Grundplatte 12 einen ringförmigen Aufnahmeraum 16 zur bereichsweisen Aufnahme eines Abstandselements der Befestigungsanordnung ein. Der erste Steg 14 und der zweite Steg 15 ragen ausgehend von der Grundplatte 12 ab, wobei die Erstreckung des zweiten Stegs 15 grösser als die Erstreckung des ersten Stegs 14 ist, so dass der zweite Steg 15 als Führung bei der Montage des Verschlussdeckels 11 dient. Die Fläche der Grundplatte 12 zwischen dem ersten Steg 14 und dem zweiten Steg 15 weist eine raue Struktur auf. In Richtung der Erstrekkung des ersten Stegs 14 sind gleichmässig am äusseren Umfang desselben vier, streifenförmig ausgebildete Erhebungen 20 vorgesehen, die keilförmig ausgebildet sind, wobei deren radiale Erstreckung in Richtung der Grundplatte 12 zunimmt.

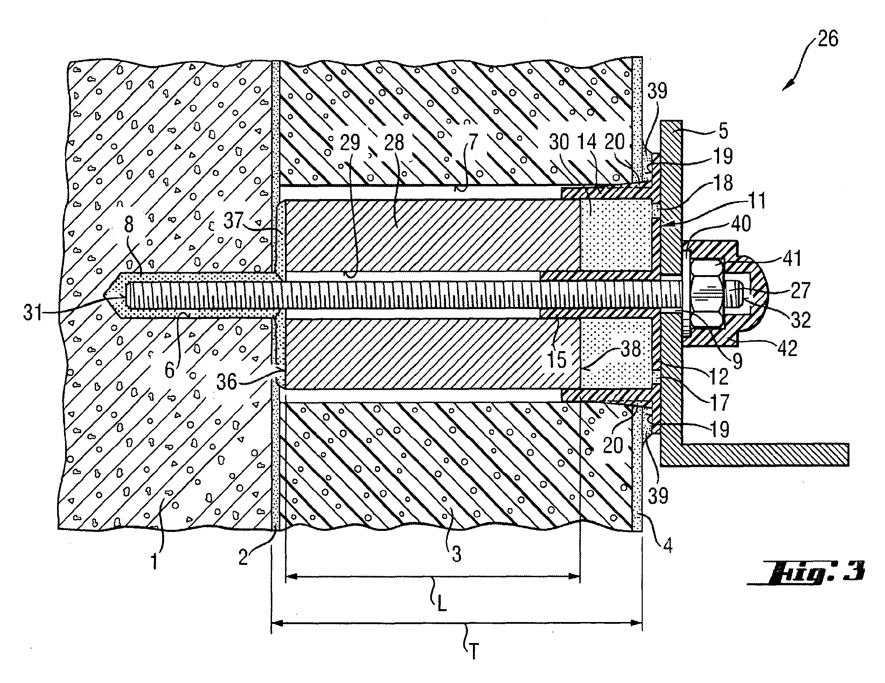

In Fig. 3 ist eine erfindungsgemässe Befestigungsanordnung 26 zur beabstandeten Befestigung eines Gegenstandes 5 an einem Untergrund 1 gezeigt. Der Gegenstand 5 ist in diesem Ausführungsbeispiel ein Markisenhalter, der an einer mit einer wärmedämmenden Verkleidung 3 versehenen Aussenwand eines Gebäudes festgelegt werden soll. Die wärmedämmende Verkleidung 3 ist mittels eines Klebers 2 an dem Untergrund 1 befestigt und mit einer Schutzschicht 4 in Form eines Deckputzes versehen. Die Befestigungsanordnung 26 weist ein Verankerungselement 27 mit einem einen Verankerungsabschnitt aufweisenden ersten Ende 31 und einem einen Befestigungsabschnitt aufweisenden zweiten Ende 32, ein Abstandselement 28 mit einer Durchführöffnung 29 für das Verankerungselement 27 und einen Verschlussdeckel 11 auf, wobei der Hohlraum zwischen dem freien Ende des Abstandselements 28 und dem Verschlussdeckel 11 mit einer Verfüllmasse 30 verfüllt wird.

Anhand der Fig. 3 wird nachfolgend ein möglicher Montagevorgang für die Befestigungsanordnung 26 dargelegt. An der gewünschten Stelle wird ein Bohrloch 6 in den Untergrund 1 für die Verankerung des Verankerungselements 27 durch die Verkleidung 3 erstellt und ein Klebemörtel 8 beispielsweise mittels einer Klebemörtel-Patrone in das Bohrloch 6 eingeführt. Durch die Schutzschicht 4, die Verkleidung 3 und den Kleber 2 hindurch wird mit einem Kernbohrer eine diese durchsetzende Ausnehmung 7 erstellt, wobei die zuvor erstellte Bohrung als Zentrierbohrung für den Kernbohrer dient. Anschliessend wird die Tiefe T der Ausnehmung 7 gemessen.

Anhand der gemessenen Tiefe T wird das Abstandselement 28 in der Länge kürzer als die Tiefe der zu überbrückenden nichttragenden Schicht von einem rohrförmigen Halbfabrikat abgelängt. Die Länge L des abgelängten Abstandselements 28 entspricht etwa der Tiefe T minus 1 cm. Auf das Ende 36, das im eingeführten Zustand des Abstandselements 28 an dem Untergrund 1 zu liegen kommt, wird ein als Haftmittel 37 eine kleine Menge eines aushärtbaren und danach druckfesten Zweikomponenten-Injektionsmörtels aufgebracht und das Abstandselement 28 vollständig bis zur Anlage am Untergrund 1 in die Ausnehmung 7 eingeführt.

Auf die Anlagefläche 19 des Verschlussdeckels 11 wird eine Dichtmasse 39 aufgebracht und anschliessend wird der Verschlussdeckel 11 mit dem ersten Steg 14 und dem zweiten Steg 15 voran über das freie Ende 38 des Abstandselement 28 geschoben, bis der Verschlussdeckel 11 an der Aussenseite der Schutzschicht 4 anliegt. Beim Andrücken des Verschlussdeckels 11 an die Schutzschicht 4 wird die Dichtmasse 39 seitlich ausgepresst und bildet eine zuverlässige, vorteilhaft elastische Abdichtung gegen das Eindringen von Feuchtigkeit. Beim Einschieben des Verschlussdeckels 11 verdrängen zudem die Erhebungen 20 am äusseren Umfang des ersten Stegs 14 bereichsweise das umgebende Material, wodurch der Verschlussdeckel 11 zusätzlich zu der Haftwirkung der Dichtmasse 39 in der gewünschten Position gehalten wird. Durch die Einfüllöffnung 17 in der Grundplatte 12 wird der Hohlraum zwischen dem Abstandelement 28 und dem Verschlussdeckel 11 mit der fliessfähigen, aushärtbaren Verfüllmasse 30 in Form eines Zweikomponenten-Injektionsmörtels mittels eines geeigneten Auspressgerätes (nicht dargestellt) verfüllt, bis die Verfüllmasse 30 in der Austrittsöffnung 18 zu sehen ist oder aus der Austrittsöffnung 18 austritt.

Durch die Durchführöffnung 13 in der Grundplatte 12 des Verschlussdeckels 11 und die Durchführöffnung 29 des Abstandselements 28 hindurch wird das Verankerungselement 27 hindurchgeführt und in den Klebemörtel 8 im Bohrloch 6 eingedreht. Nach dem Aushärten des Klebemörtels 8 ist das Verankerungselement 27 im Untergrund verankert.

Nach dem Aushärten der Verfüllmasse 30 ist ein aus dem Abstandselement 28, der ausgehärteten Verfüllmasse 30 und dem Verschlussdeckel 11 bestehendes druckfestes Element vorhanden, an dem der zu befestigende, eine Bohrung 9 aufweisende Gegenstand 5 beispielsweise mittels dem Verankerungselement 27, einer Unterlegscheibe 40 und einer Mutter 41 fixiert wird. Im Zustand der fest angezogenen Mutter 41 überträgt die Befestigungsanordnung eine Druckkraft von dem Gegenstand 5 auf den Untergrund 1, wobei das Verankerungselement 27 die entsprechende Zugkraft aufnimmt. Für einen Korrosionsschutz, aus optischen Gründen und/oder für eine bessere thermische Isolation kann über das Verankerungselement 27, die Unterlegscheibe 40 und die Mutter 41 eine vorzugsweise aus Kunststoff gefertigte Abdeckkappe 42 angeordnet werden.

## Patentansprüche

1. Befestigungsanordnung (26) zur beabstandeten Befestigung eines Gegenstandes (5) an einem Untergrund (1), insbesondere an einem mit einer Verkleidung (3) versehenen Bauteil, die ein Verankerungselement (27) mit einem einen Verankerungsabschnitt aufweisenden ersten Ende (31) und einem zumindest einen Befestigungsabschnitt aufweisenden zweiten Ende (32) sowie einen Verschlussdeckel (11) mit einer Grundplatte (12) aufweist, die eine Durchführöffnung (13) für das Verankerungselement (27) der Befestigungsanordnung (26) und einen von der Grundplatte (12) abragenden, umlaufenden ersten Steg (14) aufweist, wobei ein Aufnahmeraum (16) ausgebildet ist, wobei zumindest eine Einfüllöffnung (17) an der Grundplatte (12) vorgesehen ist, **dadurch gekennzeichnet, dass**
die Befestigungsanordnung (26) ein Abstandselement (28) mit einer Durchführöffnung (29) zur Durchführung des Verankerungselements (27) aufweist, wobei der Aufnahmeraum (16) des Verschlussdeckels (11) das Abstandselement (28) bereichsweise aufnimmt und der Aufnahmeraum (16) mit einer Verfüllmasse (30) verfüllbar ist.

2. Befestigungsanordnung nach Anspruch 1, **dadurch gekennzeichnet, dass** zumindest eine Austrittsöffnung (18) an der Grundplatte (12) vorgesehen ist.

3. Befestigungsanordnung nach Anspruch 1 oder 2, **dadurch gekennzeichnet, dass** zusätzlich ein von der Grundplatte (12) abragender, umlaufender zweiter Steg (15) im Bereich der Durchführöffnung (13) vorgesehen ist, wobei der erste Steg (14) und der zweite Steg (15) parallel zueinander verlaufend angeordnet sind.

4. Befestigungsanordnung nach Anspruch 1 bis 3, **dadurch gekennzeichnet, dass** der erste Steg (14) und/oder der zweite Steg (15) von der Grundplatte (12) ausgehend von dieser abragen.

5. Befestigungsanordnung nach Anspruch 1 bis 4, **dadurch gekennzeichnet, dass** der erste Steg (14) beabstandet zum äusseren Umfang an der Grundplatte (12) angeordnet ist.

6. Befestigungsanordnung nach Anspruch 1 bis 5, **dadurch gekennzeichnet, dass** sich in Richtung der Erstreckung des ersten Steges (14) verlaufende, optional keilförmig ausgebildete Erhebungen (20) vorgesehen sind.

7. Befestigungsanordnung nach Anspruch 1 bis 6, **dadurch gekennzeichnet, dass** die Grundplatte (12) zumindest bereichsweise eine raue Struktur aufweist.

8. Befestigungsanordnung nach Anspruch 1 bis 7, **dadurch gekennzeichnet, dass** die Grundplatte (12) kreisförmig ausgebildet ist sowie optional der erste Steg (14) und der zweite Steg (15) konzentrisch an der Grundplatte (12) angeordnet sind.

9. Befestigungsanordnung nach Anspruch 1, **dadurch gekennzeichnet, dass** die Verfüllmasse (30) eine fliessfähige, aushärtbare Masse, insbesondere ein Zweikomponenten-Injektionsmörtel ist.

## Claims

1. Fastening device (26) for the spaced attachment of an object (5) to a substrate (1), in particular to a building component provided with a cladding (3), comprising an anchoring element (27) with a first end (31) having an anchoring section and a second end (32) having at least one fastening section, and a closing cover (11) with a base plate (12) which has a through-opening (13) for the anchoring element (27) of the fastening device (26) and a peripheral first web (14) projecting from the base plate (12), a receptacle (16) being formed and at least one filling opening (17) being provided in the base plate (12), **characterised in that** the fastening device (26) has a spacer element (28) with a through-opening (29) through which the anchoring element (27) is passed, the receptacle (16) of the closing cover (11) partially receiving the spacer element (28) and the receptacle (16) being able to be filled with a filling compound (30).

2. Fastening device according to Claim 1, **characterised in that** at least one exit opening (18) is provided in the base plate (12).

3. Fastening device according to Claim 1 or 2, **characterised in that** a peripheral second web (15) projecting from the base plate (12) is provided additionally in the region of the through-opening (13), the first web (14) and the second web (15) being arranged parallel to one another.

4. Fastening device according to Claims 1 to 3, **characterised in that** the first web (14) and/or the second web (15) project(s) from the base plate (12), starting therefrom.

5. Fastening device according to Claims 1 to 4, **characterised in that** the first web (14) is arranged at a distance from the outer periphery of the base plate (12).

6. Fastening device according to Claims 1 to 5, **characterised in that** optionally wedge-shaped elevations (20) disposed in the direction of extension of the first web (14) are provided.

7. Fastening device according to Claims 1 to 6, **characterised in that** the base plate (12) has at least zonally a rough texture.

8. Fastening device according to Claims 1 to 7, **characterised in that** the base plate (12) has a circular configuration and the first web (14) and the second web (15) are optionally arranged concentrically on the base plate (12).

9. Fastening device according to Claim 1, **characterised in that** the filling compound (30) is a flowable, hardenable compound, in particular a two-component injection mortar.

## Revendications

1. Dispositif de fixation (26) pour la fixation distante d'un objet (5) à un support (1), en particulier à un élément de construction muni d'un parement (3), ledit dispositif de fixation comportant un élément d'ancrage (27) avec une première extrémité (31) pourvue d'une portion d'ancrage et avec une seconde extrémité (32) pourvue d'une portion de fixation et comportant un couvercle de fermeture (11) avec une plaque de base (12), laquelle comporte une ouverture traversante (13) pour l'élément d'ancrage (27) du dispositif de fixation (26) et une première jupe périphérique (14) en saillie sur la plaque de base (12), un compartiment récepteur (16) étant ménagé, au moins une ouverture d'introduction (17) étant prévue sur la plaque de base (12), **caractérisé en ce que** le dispositif de fixation (26) comporte un élément d'écartement (28) avec une ouverture traversante (29) pour passer l'élément d'ancrage (27), le compartiment récepteur (16) du couvercle de fermeture (11) recevant l'élément d'écartement (28) par endroits, et le compartiment récepteur (16) pouvant être rempli d'une masse de remplissage (30).

2. Dispositif de fixation selon la revendication 1, **caractérisé en ce qu'**au moins une ouverture de sortie (18) est prévue dans la plaque de base (12).

3. Dispositif de fixation selon la revendication 1 ou 2, **caractérisé en ce qu'**une seconde jupe périphérique (15) en saillie sur la plaque de base (12) est également prévue dans la zone de l'ouverture traversante (13), la première jupe (14) et la seconde jupe (15) possédant des tracés parallèles l'un à l'autre.

4. Dispositif de fixation selon la revendication 1 à 3, **caractérisé en ce que** la première jupe (14) et/ou la seconde jupe (15) font saillie sur la plaque de base (12) à partir de celle-ci.

5. Dispositif de fixation selon la revendication 1 à 4, **caractérisé en ce que** la première jupe (14) est disposée à distance de la périphérie extérieure de la plaque de base (12).

6. Dispositif de fixation selon la revendication 1 à 5, **caractérisé en ce qu'**il est prévu des reliefs optionnellement cunéiformes (20) qui s'étendent dans le sens de l'extension de la première jupe (14).

7. Dispositif de fixation selon la revendication 1 à 6, **caractérisé en ce que** la plaque de base (12) présente, au moins par endroits, une structure rugueuse.

8. Dispositif de fixation selon la revendication 1 à 7, **caractérisé en ce que** la plaque de base (12) est de conformation cunéiforme et, optionnellement, la première jupe (14) et la seconde jupe (15) sont disposées concentriquement sur la plaque de base (12).

9. Dispositif de fixation selon la revendication 1, **caractérisé en ce que** la masse de remplissage (30) est une masse coulante durcissable, en particulier un mortier d'injection à deux composants.
